# EUROPEAN PATENT SPECIFICATION

(11) **EP 0 626 810 B1**
(45) Date of publication and mention of the grant of the patent: **03.04.1996**
(21) Application number: 92904489.9
(22) Date of filing: 21.02.1992
(51) Int. Cl.: A22B 3/06

(54) **APPARATUS FOR STUNNING ANIMALS**
VORRICHTUNG ZUM BETÄUBEN VON SCHLACHTTIEREN
APPAREIL POUR ASSOMMER LES ANIMAUX

(43) Date of publication of application: 07.12.1994
(73) Proprietor: VANHAECKE, Hubert, B-8630 Veurne (BE)
(72) Inventor: VANHAECKE, Hubert, B-8630 Veurne (BE)
(74) Representative: Powis de Tenbossche, Roland
(86) International application number: BE9200005
(87) International publication number: WO9316599

(56) References cited:
- EP-A- 0 060 004
- EP-A- 0 060 527
- DE-A- 3 029 037
- US-A- 4 586 216

## Description

The present invention relates to an apparatus for stunning animals. The stunning of animals, such as pigs, by means of an electrical current is well known in the art and apparatus have been developed leading to an increase of the production level.

Such an apparatus is disclosed in the patent application NL-A-7705519. The apparatus comprises two endless conveyors, said conveyors being operable to run parallel to each other and at a synchronized speed and being positioned to form a substantially V-shaped passageway therebetween, as well as a pair of electrodes or set of electrodes which are adapted to engage the head of the animal to be stunned. The electrodes are furthermore adapted to extend downwardly to said V-shaped passageway in a spaced relationship to each other and mounted on a shaft to move them out of the passageway.

The apparatus as disclosed in the NL-A-7705519 has the drawback that it is not possible to ensure that the electrodes don't bounce back on the back of the animal causing a variation of contact and an unevenness in the resistance necessary for a regular stunning.

Another known stunning apparatus is disclosed in the DD PS 89062. Said apparatus for the electrical stunning or pigs comprises: a system for moving the pigs to be stunned; a detector for detecting the passage or a pig to be stunned; an electrical stunning fork actuated by a cylinder intended to press the fork on the pig during the stunning operation and to lift said fork thereafter, and a wheeled carriage moving along rails, said wheeled carriage bearing the above mentioned cylinder. The pigs, moved by the conveyor, move the electrodes of the wheeled carriage and the wheeled carriage at substantially the same speed of the conveyor. The wheeled carriage returns not fast enough to allow a higher production.

A further apparatus is disclosed in the European patent specification EP-B-0019332. In this apparatus a driving mechanism acts on a driving element bearing electrodes so that the speed of forward movement of the driving element is about the same as the speed of movement of the pig to be stunned. In this latter apparatus, the production level is limited by the time needed for raising the electrodes so that they no longer contact the stunned pig by gliding on his back and by the time, needed thereafter, for returning the wheeled carriage supporting the electrodes back to the position for starting a stunning operation.

Document DE-A-3029037 discloses a similar stunning installation whereby the electrode carrier is pivoted away from the stunned pig's path.

The apparatus of the prior art are unable to take into account the height of the animal to be stunned so that the evenness of the stunning of animals of various heights cannot be ensured. Therefore, it is not possible to ensure that, after the stunning, no contact between the electrodes and the stunned pig arises Such a further contact, if occuring, being detrimental for the pig to be slaughtered.

The apparatus of the present invention obviates this drawback, even if the production level is high.

Said apparatus is provided with a means for raising at the end of the stunning operation the carrier with respect to the path or the electrode during the stunning operation, so as to ensure the removal or the electrode out of the passageway of the stunned animal, i.e. so as to ensure that, when the electrodes no more contact the head of the stunned animal, said electrodes can never contact said stunned animal, for example its back, during the removal of said animal from the apparatus and during the back movement of the carrier, so as to replace it back for a new stunning operation.

The height of the apparatus of the present invention can be at least partly adjusted so as to allow the stunning of smaller or bigger animals. Moreover by means of an apparatus according to the invention, at the end of a stunning operation, the contact between the animal and the stunning electrodes can be progressively reduced so as to avoid any damage of the animal to be slaughtered.

It is possible, due to the safer working of the apparatus according to the invention, to guarantee a constant quality of the stunned pig by giving the certainty that after the stunning the electrodes no longer contact the animal while avoiding completely and instantly any risk of further stunning of the stunned pigs.

The apparatus according to the present invention comprises a conveyor for moving animals to be stunned, a carrier bearing at least one electrode and a means for driving said carrier during the actual stunning operation. The apparatus comprises a means for obtaining a raising of the carrier at the end of the stunning operation in relation to the path of the electrodes during the stunning operation. According to an embodiment of the apparatus according to the invention the driving means is hingedly connected to a supporting means and is linked to an organ for pivoting the driving means so that at the end of the stunning operation the driving means has been pivoted in relation to the path of the electrodes during the stunning operation. Due to said pivotment, the carrier is raised so that the electrodes are quickly removed from the path defined by the conveyor giving the certainty that the electrodes no longer contact the animal while avoiding completely and instantly any risk of further stunning of the stunned pigs. Preferably said pivotment or raising is made at or just before the end of the stunning operation.

According to another embodiment, the driving means comprises two parts. A first part is hingedly linked to a supporting means, while the second part is linked by means of an organ to another supporting means so as to raise or lower said second part with respect to the endless conveyor for moving the animals or to the path defined by the endless conveyors for moving said animals.

Advantageously, the above mentioned organ is a cylinder, one end of which is hingedly linked to a supporting means, while the free end of its piston rod is hingedly linked to the second part of the driving means or conversely.

Preferably, the driving means is a cylinder, the piston rod of which bears the carrier provided with the electrodes.

According to another embodiment the carrier bears two electrodes which are arranged the one to the other in such a way that during a stunning operation, a first electrode contacts the head of an animal to be stunned in the neighbourhood of one of his eyes, while the second electrode contacts the head of said animal in the neighbourhood of one of his ears. Preferably, a first electrodes contacts the head of an animal to be stunned in the neighbourhood of the eye of one side of its head, while the second electrode contacts the head of said animal in the neighbourhood of the ear of the opposite side of its head.

Advantageously the electrodes are separated from each other by a minimal distance and have sides facing the one to the other. Said sides, at least in the neighbourhood of the free end of the electrodes are separated the one to the other by a distance which increases in the direction of the hinge point or shaft of the electrode. Said sides form at least partly the contact surface of the electrode with the animal to be stunned. Preferably the side intended to contact an animal of a first electrode faces only partly the side intended to contact the animal of the second electrode.

The downward ends of the electrodes comprise a face or surface stretching into a direction forming an angle different from 90° with respect to the shaft. Said downward ends bear an element or have surfaces intended to be contacted with the side of the head of an animal to be stunned. It can be ensured due to the difference in length between the first electrode and the length of the second electrode, that during a stunning operation the first electrode contacts the head of an animal in the neighbourhood of one of his ears, while the second electrode contacts the head of the animal in the neighbourhood of one of his eyes. Preferably, said first electrode contacts the ear and not the eye of one side of the head of the animal, while the second electrode contacts the eye and not the ear of the opposite side of the head of the animal.

Preferably the angle formed between the shaft and the direction of the part having a surface intended to contact the head side of an animal in the neighbourhood of an eye is lower to the angle formed between the shaft and the direction of the part having a surface intended to contact the head side of an animal in the neighbourhood of an ear.

According to a preferred embodiment, the electrode intended to contact the side of the head in the neighbourhood of an eye comprises a downwards end bearing an element having a spoon-shaped surface intended to act as a contact surface between the electrode and an eye.

Preferably, the electrodes are connected to the carrier by a means for moving the electrodes with respect to the carrier. Most preferably, the electrodes are linked to the carrier by a means for moving one end of the electrodes towards the animal during the raising of the carrier with respect to the conveyor for moving the animal during a stunning operation, so as to reduce progressively the resistance induced by the electrode against the forward movement of the animal due to the conveyor. It is possible by means of this reduction of the resistance to ensure that the electrodes are removed more quickly from the stunned animal.

The electrodes are advantageously mounted on shaft(s), while the carrier is provided with cylinders acting on the electrodes so as to pivote them around their shaft.

According to a further embodiment the supporting means to which a first part of the driving means is hingedly linked comprises an element for raising or lowering said first part with respect to the endless conveyors for moving the animals. Preferably, the apparatus according to the present invention further comprises a means for detecting the height of an animal to be stunned, and a means acting on the organ and on the driving element so as to adapt the level of the carrier at the beginning of a stunning operation in relation to the detected height.

According to a preferred embodiment of the apparatus according to the invention, the electrodes are connected to the carrier by a means for moving at least partly the electrodes away with respect to the carrier during its raising or lifting just before the end of a stunning operation. According to a characteristic of said embodiment the electrodes are hingedly connected to the carrier and are linked to one or more cylinders so as to pivote one end of the electrodes away from the carrier during its raising at the end of a stunning operation.

In such an embodiment the electrodes lay, during the stunning, advantageously in a rather horizontal plane. The electrodes come, just before the end of the stunning, in a more vertical position by means of the lifting of the whole mechanism supporting the electrodes hingedly connected to it on their shafts. The contact between the animal and the stunning electrodes is reduced progressively while the electrodes are positioned more vertically as the whole system is progressively lifted already before the end of the stunning cycle.

Another object of the present invention relates to a process for electrically stunning animals to be slaughtered. The animal to be stunned is moved towards two electrodes. While moving said animal its head is contacted by the two electrodes for stunning the animal. Just before the end of a stunning operation, the electrodes are removed from said head so as to reduce progressively the contact of the animal against the electrodes.

Preferably the electrodes are pivoted at the end of a stunning operation from a substantially horizontal position to a substantially vertical position. In this case, the electrodes are advantageously, after being pivoted into a substantially vertical position so as to reduce the contact animal-electrodes, pivoted into a substantially horizontal position so as to ensure no longer contact between the electrodes and the stunned animal, while moving. SEE

Other details and characteristics of the apparatus according to the invention will appear from the following description in which reference is made to the attached drawings. In said drawings:
Figure 1 shows an apparatus according to the prior art as teached by EP 0019332.
Figure 2 is a front view of an embodiment of an apparatus according to the invention.
Figure 3 is a partial view along the line III-III of the apparatus shown in figure 2.
Figure 4 is a view along the line IV - IV of the apparatus of figure 2.
Figures 5 to 8 show the apparatus of figure 2 during its working.
Figure 9 is a partial side view of another embodiment of an apparatus according to the invention.
Figure 10 is a partial side view of a further embodiment of an apparatus according to the invention.
Figures 11 shows on an enlarged scale the electrodes of the apparatus shown in figure 2.
Figures 12 and 13 are side views of the electrodes shown in figure 11 respectively along the lines XII-XII and XIII-XIII, and.

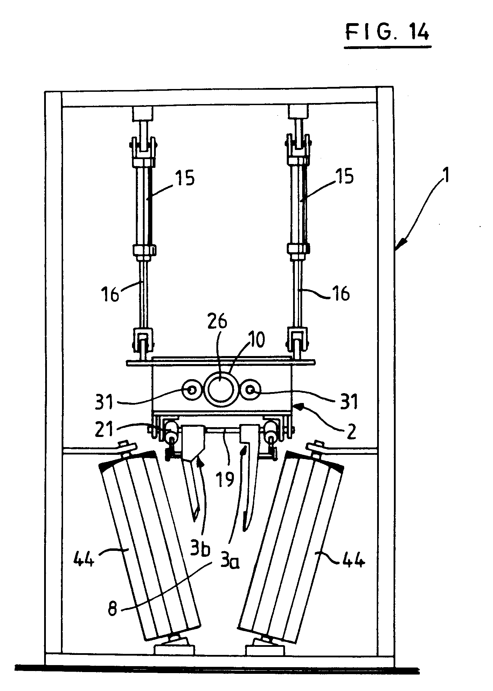

Figure 14 is a partial back view of the apparatus shown in figure 2.

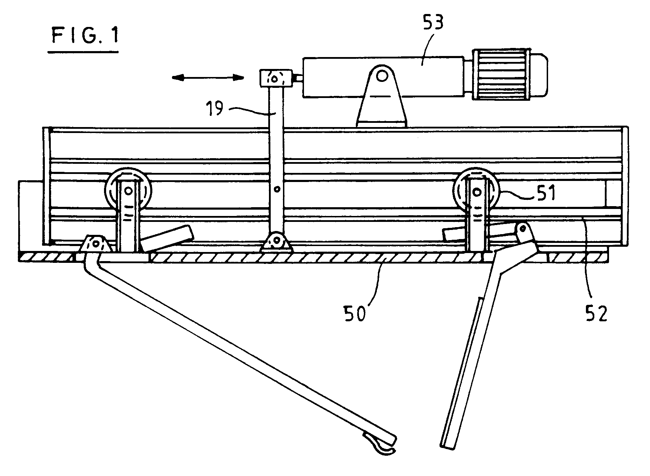

Figure 1 shows an apparatus according to the prior art, namely EP-B-0019332. This apparatus comprises two endless conveyors (not represented) defining a V-shaped passageway for the animals to be stunned. By means of said endless conveyors, the animals are moved towards electrodes 54. Said electrodes are mounted on shafts fixed on a wheeled carriage 50, the latter being provided with rollers 51 rolling on horizontal rails 52 (stretching substantially parallel to the passageway defined by the endless conveyors). A cylinder 53 acts on the wheeled carriage so as to displace it horizontally substantially parallel to the passageway. During a stunning operation, the carriage is moved so that the electrodes contact the animal to be stunned while moving.

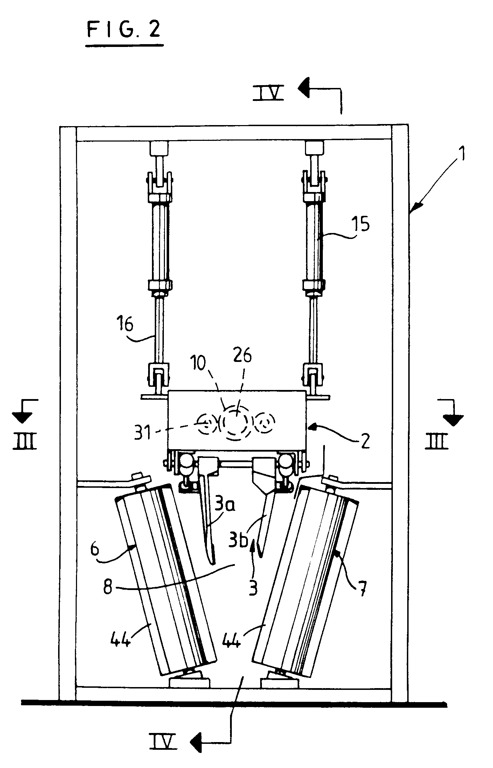

Figures 2 to 4 show an apparatus according to the invention. Said apparatus comprises a frame 1, an L-shaped carrier 2 bearing two electrodes 3; endless conveyors 6, 7 for moving the animals, a driving means 5 for driving said carrier 2 in a direction B substantially parallel to the direction A of movement of the endless conveyors 6, 7 and thus of the animals to be stunned.

The endless conveyors 6, 7 run parallel to each other and are positioned so as to form a substantially V-shaped passageway between the surfaces 8, 9 of said endless conveyors 6, 7. The two electrodes 3 are adapted to extend into said V-shaped passageway for being engaged onto the head of an animal to be stunned. The L- shaped carrier 2 on or near the end of the piston rod is provided with a base plate 18 bearing a shaft 19 on which the electrodes 3 are mounted. Cylinders 21 are hingedly connected by hinge 20 to the plate 18. The piston rod 22 of each cylinder 21 is hinged to an electrode 3. The movement of said piston rod 22 in the direction of arrows C and D causes respectively the pivotment of the electrode 3 in the direction of arrows E and F.

The driving means 5 of the carrier 2 bearing the electrodes 3 consists of a cylinder 10, one end 11 of which is hinged to a beam 12 of the frame 1, while the other end 13 of which is linked to another beam 14 of the frame 1 by means of a cylinder 15. The latter is hinged to said beam 14, while the free end of its piston rod 16 is hinged to the cylinder 10. The working of said cylinder 15 (arrow Z) causes the pivotment (P) of the cylinder 10 around the pivot shaft 17 forming the hinge point of the end 11 of the cylinder 10.

The piston rod 22 which moves in the direction of arrows C, D acts on the electrodes 3 so as to pivote said electrodes 3 around the shaft 19 (arrows E and F).

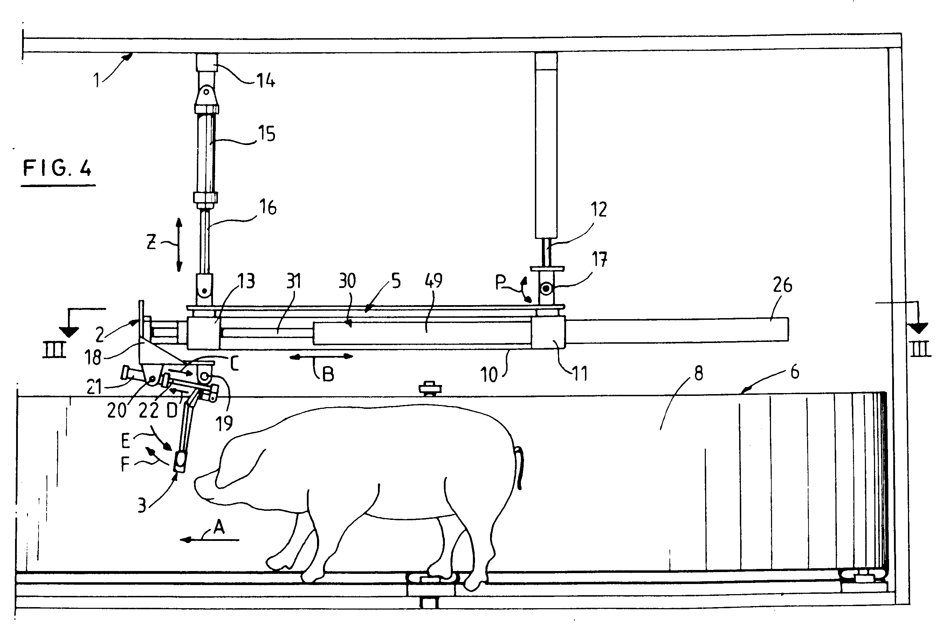

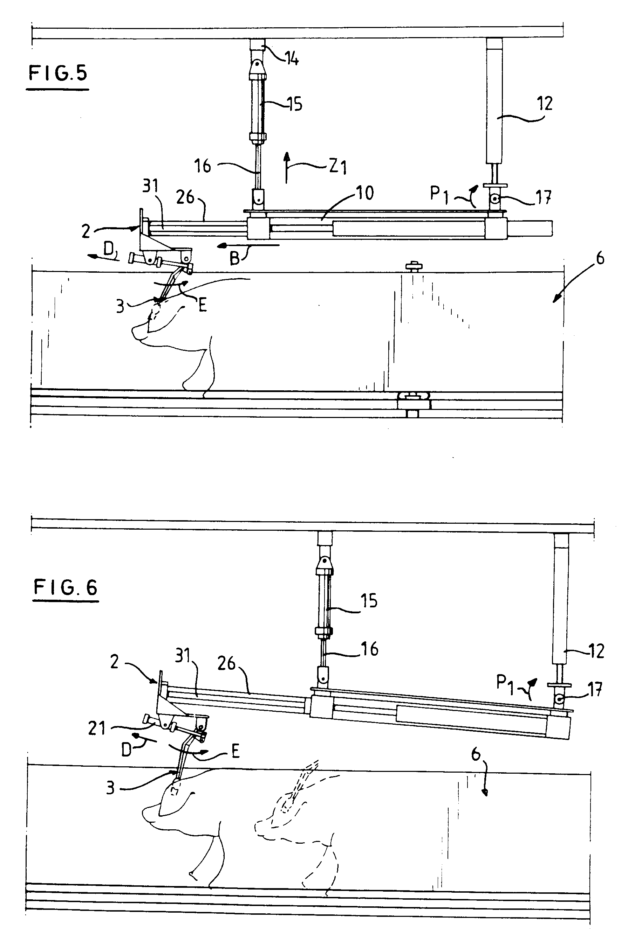

The working of the apparatus described hereabove is as follows. An animal is moved towards the two electrodes 3 and contacts said electrodes 3 for starting a stunning operation. Due to the working of cylinder 10 and of the endless conveyors 6, 7 the electrodes 3 and the animal are moved together so as to ensure a contact between the head of the animal and the electrodes 3 during a time corresponding to the time required for a correct stunning of the animal (figures 4 and 5).

At the end of the stunning operation cylinder 10 in still actuated so as to move the carrier 2 into the direction B and cylinder 15 is actuated so as to raise upwardly the end 13 of the cylinder 10 as well as the carrier 2 (Arrow Z1 see figure 5). Due to the action of cylinder 15 on cylinder 10, the latter pivotes around the shaft 17 (Arrow P 1)

In order to obtain a progressive removal of the electrode from the animal and to obtain a progressive reduction of the contact, cylinders 21 are actuated (arrow D) so as to pivote the electrodes around shaft 19 for pushing the ends of the electrodes 3 against the animal. (Figures 5 and 6). In figure 6, the position of the animal and of the electrodes when cylinder 15 is not actuated is represented in dashed lines.

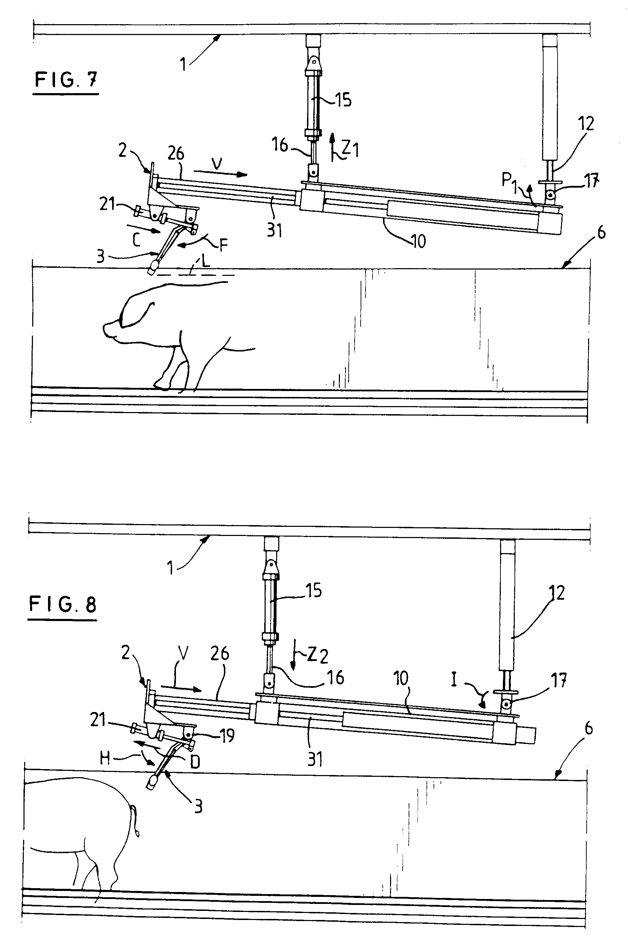

When the electrodes are substantially vertical, cylinder 21 is actuated so as to pivote the electrodes around the shaft 19 towards the carrier (arrows C and F, figure 7). The cylinder 15 still acts on the cylinder 10 so as to pivote the cylinder 10, the piston rod 26 thereof and the carrier 2 around the pivot shaft 17 in the direction of arrow P1 i.e. so as to raise the carrier 2 with respect to the endless conveyors 6, 7 for moving the animal. The electrodes 3 are therefore removed quickly and on a safer manner from the passageway formed between the two conveyors.

It has been observed that by using an apparatus as described hereabove it was possible to raise the electrodes 3 away out from the passageway in a time which was shorter than the time required by the known apparatus.

In fact due to the workings of cylinders 21 and 15, when the piston rods 22 and 16 thereof have been moved partly (for example a halfway movement), the electrodes 3 are no longer within the passageway so that the stunned animal can be conveyed away from the stunning apparatus. When the electrodes 3 are no more in the V-shaped passageway, the cylinders 21 and 15 are still working so as to rotate cylinder 10, piston rod 26 thereof, carrier 2 and electrodes 3 in the direction of arrows P1 and F, but cylinder 10 acts on the piston rod 26 thereof so as to move back (arrow V) the carrier 2 bearing the electrodes 3 for a new stunning operation. Due to the working of cylinders 21 and 15 (arrows Z1 and F) which tend to raise the electrodes 3 with respect to the endless conveyors 6, 7 for moving the animal and due to the working of cylinder 10 (arrow V) which tends to lower the carrier 2 bearing the electrodes 3 towards these endless conveyors 6, 7 the free ends of the electrodes 3 remain substantially at the same level L (Figure 7). Said level can for example be predetermined by a detector of the height of the animal to be stunned.

After moving the piston rod 26 of cylinder 10 arrow V halfway, the cylinders 21 and 15 (arrows D Z1) are actuated so as to replace the electrodes 3 back for a new stunning operation (pivotement of the electrodes 3 around shaft 19 -arrow H- and pivotment of cylinder 10 around pivot shaft 17 -arrow I- Figure 8).

When the piston rod 26 of cylinder 10 has been moved back, another animal is conveyed to be stunned.

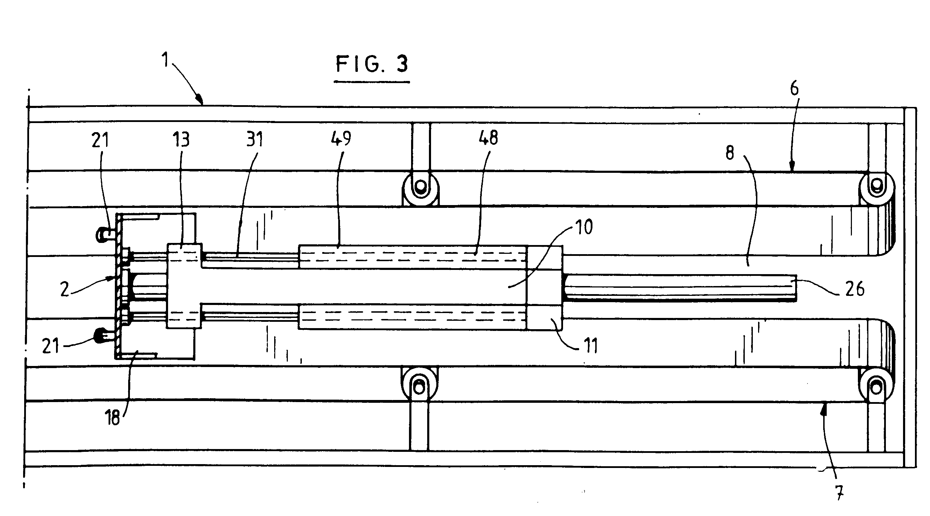

When using a cylinder 10 as driving means, the carrier 2 is advantageously provided with guiding means 30. Said guiding means consist of bars 31 secured on the carrier and stretching parallel to the piston rod 26 of the cylinder 10. Said bars are engaged partly into an opening 48 of a piece 49 secured on the cylinder 10 (figures 3 and 4).

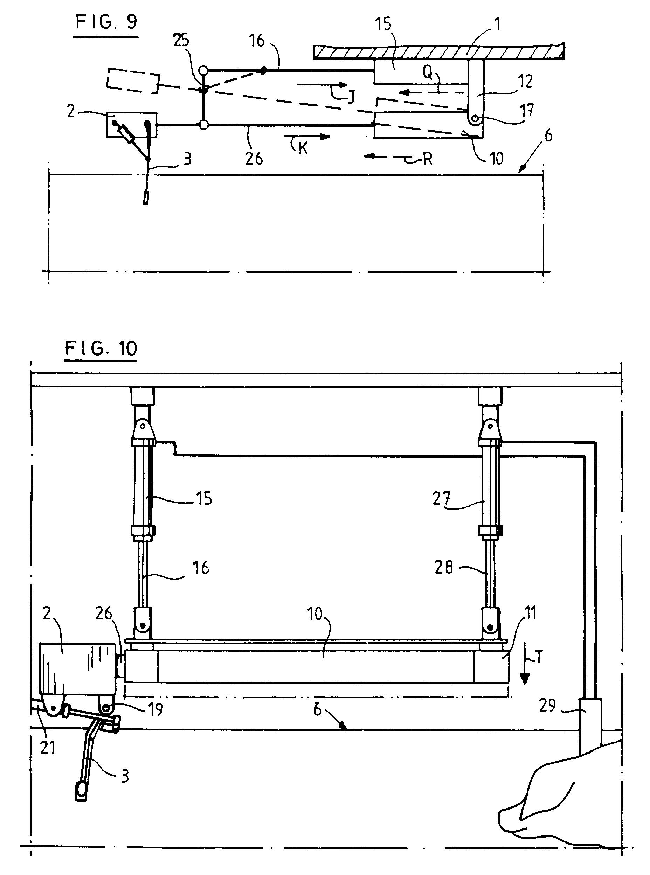

Figure 9 shows another embodiment of an apparatus according to the invention. This apparatus is similar to the apparatus shown in figure 1. However, in this apparatus, the piston rod 26 of cylinder 10 (cylinder 10 which is mounted on the pivot shaft 17) is linked to the piston rod 16 of cylinder 15 by means of a link, such as a bar 25, one end of which is hinged on the piston rod 16, while the other end of which is hinged on the piston rod 26 of cylinder 10.

A back movement J of the piston rod 16 with respect to the piston rod 26 of cylinder 10 causes the pivotment of cylinder 10, so as to raise the electrodes 3 with respect to the endless conveyor 6, 7. The cylinder 15 also facilitates the back movement K of the piston rod 26 of the cylinder 10 .

In the same way at the end of the back movement of the piston rod 26 of the cylinder 10 (arrow K), the piston rod 16 is moved away from cylinder 15 (arrow Q) so that the piston rod 26 of cylinder 10 is placed back at the level for stunning an animal, this movement (arrow Q) facilitates also the movement of the carrier 2 bearing the electrodes 3 during a stunning operation (arrow R). In this embodiment, cylinder 15 is secured to the frame 1, only cylinder 10 is hinged to a support beam 12 of the frame 1. Preferably as shown in figure 9, the piston rods 26 and 16 of the cylinders 10, 15 are substantially parallel to each other, at least when starting a stunning operation.

Figure 10 shows a further embodiment of an apparatus according to the invention. Said apparatus is similar to the apparatus shown in figure 3 except that the supporting means which is a beam 12 in the embodiment of figure 3 comprises a cylinder 27 hingedly connected to the frame 1, while the free end of its piston rod 28 is hingedly linked to end 11 of the cylinder 10 of the driving means.

It is possible in this embodiment to raise or lower (arrows T) said end 11 of the cylinder 10 with respect to the endless conveyors 6, 7 for moving the animal, as well as the part 13 of the driving means with respect to said endless conveyor 6, 7. It is therefore possible to adapt the level of the carrier 2 at the beginning of a stunning operation in relation to the height of the animal to be stunned. For this purpose, the apparatus comprises for example a detector 29 measuring the height of the animal to be stunned and operating cylinders 15 and 27 so as to adapt the level of the carrier 2 in relation to the height of the animal, i.e.the level of the electrodes 3 in relation to the height of the animal. For example, the carrier 2 and the cylinder 10 can be lowered from the level as shown in figure 10 to the lower level shown in dashed lines in said figure;

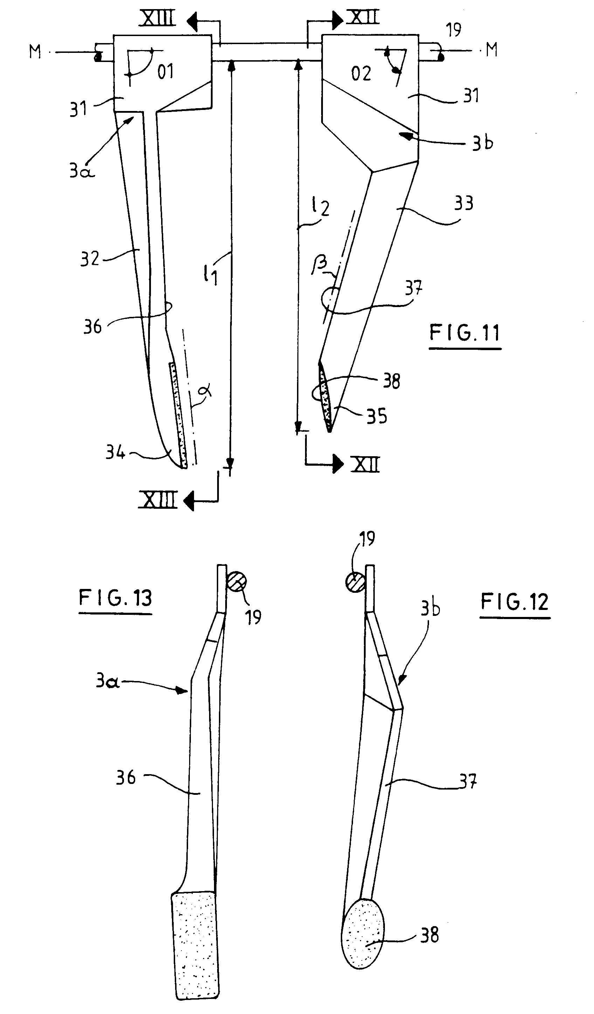

Figures 11 to 13 show on an enlarged scale the electrodes used in the apparatus shown in figure 2.

The electrodes 3 are arranged the one to the other in such a way that during a stunning operation, a first electrode 3a contacts the side of the head of an animal to be stunned in the neighbourhood of its ear and not in the neighbourhood of its eye while the second electrode 3b contacts the opposite side of the head of the animal in the neighbourhood of its eye and not in the neighbourhood of its ear.

As shown in figure 11, the electrodes 3a, 3b comprise a support plate 31 mounted an the shaft 19, and bearing a leg 32, 33. The leg 32 of a first electrode has a length L1 into a direction perpendicular to the direction in which the shaft 19 stretches which is greater than the length L2 of the leg 33 of the second electrode 3 b (length L2 into a direction perpendicular to the shaft direction).

The legs are separated the one from the other by a distance which is minimal in the neighbourhood of their free ends 34, 35, and which is increased in the direction of the shaft 19.

One side 36 of the leg 32 faces one side 37 of the leg 33, said side stretching into a direction α, β different from 90° with respect to the shaft direction. Preferably the direction α of the side 36 of the leg 32 of the electrode 3a intended to contact an ear forms an angle O1 with the direction M-M which angle is greater than the angle O2 formed between the direction M-M and the direction β of the facing side 37 of the electrode 3B contacting the eye of the animal.

Advantageously the leg 33 bears an end element 38 having a spoon-shaped surface intended to contact the eye of an animal.

The apparatus according to the invention can be provided with a system intended to remove stress from the animal to be stunned. This system comprises rollers or drums 44 between which the animal to be stunned is submitted to a compression. The rollers or drums 44 have advantageously a polygonal cross-section, preferably a hexagonal cross section. These rollers compress but also push the animal to be stunned towards the conveyors 6, 7. Due to the fact that the animal to be stunned has more place at its disposal between the conveyors than between two facing polygonal rollers 44, the animal has the sensation to be free so that the stunning of said animal is more effective i.e. so that the risk of damaging the animal during the stunning can be minimized. Said drums 44 are driven into rotation by a motor (not shown). Said system is placed between two sets of conveyors, a first one being used as a means for moving the animals towards the electrodes for the stunning of said animals, while the other one acts as a means for transporting animals towards the first one. The forward movement of the first set of conveyors is more rapid than the forward movement of the second set of conveyors.

## Claims

1. Apparatus for electrically stunning animals to be slaughtered, said apparatus comprising endless conveyors (6,7) for moving animals to be stunned, a carrier (2) bearing at least one electrode (2), a driving means (5) for driving said carrier (2) during the actual stunning operation, and a means for obtaining a raising of the electrode(s) at the end of the stunning operation in relation to the path of the electrode(s) during the stunning operation, characterized in that said means for obtaining a raising of the electrode(s) comprises an organ (15) linked to the driving means, which is hingedly connected to a first supporting means (14), said organ (15) pivoting the driving means (5) so as to obtain a raising of the carrier (2), bearing the one or more electrodes (3), at the end of the stunning operation in relation to the path of the electrode(s) during the stunning operation.

2. Apparatus according to claim 1, characterized in that the driving means (5) comprises, on the one hand, a first part (13), linked by means of the organ (15) to the first supporting means (14), and on the other hand, a second part (11) hingedly linked to a second supporting means (12), so as to raise or lower said first part (13) with respect to the endless conveyors (6,7) for moving the animals.

3. Apparatus according to claim 2, characterized in that the organ (15) is a cylinder, one end of which is hingedly linked to the first supporting means (14), while the free end of its piston rod (16) is hingedly linked to the first part (13) of the driving means (5) or conversely.

4. Apparatus according to anyone of the preceding claims, characterized in that the driving means (5) is a cylinder (10), the piston rod (26) of which bears the carrier (2) bearing the electrode(s) (3).

5. Apparatus according to claim 4, characterized in that a support (18) is mounted on the piston rod (26) of the cylinder (10) acting as driving means (5), the electrode(s) (3) being (each) hingedly linked to said support (18) by means of a cylinder (21) for pivoting it with respect to said support (18).

6. Apparatus according to claim 1, characterized in that the driving means (5) and the organ (15) are cylinders, having piston rods (26,27) linked together by means of a rod (25), one end of which is hinged to the piston rod of the driving means (5), while the other end of said rod is hinged to the piston rod (26) of the organ (15).

7. Apparatus according to anyone of the preceding claims, characterized in that the carrier (2) bears two electrodes (3), said electrodes (3) being arranged the one to the other so that during a stunning operation, a first electrode (3) contacts the head of an animal to be stunned in the neighbourhood of one of his eyes, while the second electrode (3) contacts the head of said animal in the neighbourhood of one of his ears.

8. Apparatus according to anyone of the preceding claims, characterized in that the electrode(s) (3) is/are connected to the carrier (2) by a means for moving at least partly the electrode(s) (3) away with respect to the carrier (2) before the end of a stunning operation during its raising.

9. Apparatus according to claim 8, characterized in that the electrode(s) (3) is/are hingedly connected to the carrier (2) and are linked to one or more cylinders (21) so as to pivot one end of the electrode(s) (3) away from the carrier (2) during its raising at the end of a stunning operation.

10. Apparatus according to claim 1, characterized in that the second supporting means (12) to which a second part (11) of the driving means (5) is hingedly linked comprises an element (27) for raising or lowering said second part (11) with respect to the endless conveyors (6,7) for moving the animals.

11. Apparatus according to claim 10, characterized in that it comprises a means for detecting the height of an animal to be stunned, and a means acting on the organ (15) and on the element (27) so as to adapt the level of the carrier at the beginning of a stunning operation in relation to the detected height.

12. Apparatus according to anyone of the preceding claims, characterized in that the apparatus is provided with a means (44) for compressing an animal to be stunned before said animal is moved by the conveyor (6,7) towards the electrode(s) (3).

13. Apparatus according to claim 12, characterized in that the compressing means comprises two rollers (44) having a polygonal cross-section and defining there between a passageway for the animal to be stunned.

14. Process for electrically stunning animals to be slaughtered by using an apparatus according to claim 8 or 9, in which an animal to be stunned is moved towards two electrodes (3); while moving, the head of said animal is contacted with two electrodes (3) for stunning it and, while moving the animal, said electrodes are removed progressively from said head at the end of a stunning operation, so as to reduce progressively the contact of the animal against the electrodes.

15. Process according to claim 14, characterized in that at the end of a stunning operation, the carrier bearing the electrodes is lifted with respect to the conveyor of the animal, while the electrodes are pivoted so as to displace away from the carrier one end of the electrodes, whereby the contact between the animal and the electrodes is progressively reduced.

16. Process according to claim 15, characterized in that the electrodes are pivoted at the end of a stunning operation from a substantially horizontal position to a substantially vertical position.

17. Process according to claim 16, characterized in that the electrodes (3) after being pivoted into a substantially vertical position so as to reduce the contact animal-electrodes are pivoted into a substantially horizontal position so as to ensure no longer contact between the electrodes and the stunned animal, while moving.

18. Process according to claim 17, characterized in that the pivotement of the electrodes (3) into an inclined or substantially horizontal position is made around a shaft into the forward direction of the stunned animal.

## Patentansprüche

1. Vorrichtung zum elektrischen Betäuben von Schlachttieren, die folgendes umfaßt: Endlosförderer (6, 7) zum Bewegen von zu betäubenden Tieren, einen mindestens eine Elektrode (3) tragenden Träger (2), ein Antriebsmittel (5) zum Antrieb des Trägers (2) während des eigentlichen Betäubungsvorgangs und ein Mittel zum Bewirken eines Anhebens der Elektrode(n) am Ende des Betäubungsvorgangs bezüglich der Bahn der Elektrode(n) beim Betäubungsvorgang, dadurch gekennzeichnet, daß das Mittel zum Bewirken eines Anhebens der Elektrode(n) ein mit dem Antriebsmittel verbundenes Glied (15) umfaßt, das mit einem ersten Stützmittel (14) über ein Gelenk verbunden ist, wobei das Glied (15) das Antriebsmittel (5) schwenkt, um am Ende des Betäubungsvorgangs ein Anheben des Trägers (2), der die eine oder mehreren Elektroden (3) trägt, bezüglich der Bahn der Elektrode(n) beim Betäubungsvorgang zu bewirken.

2. Vorrichtung nach Anspruch 1, dadurch gekennzeichnet, daß das Antriebsmittel (5) einerseits ein erstes Teil (13), das mittels des Glieds (15) mit dem ersten Stützmittel (14) verbunden ist, und andererseits ein zweites Teil (11), das über ein Gelenk mit einem zweiten Stützmittel (12) verbunden ist, um den ersten Teil (13) bezüglich der Endlosförderer (6, 7) zum Bewegen der Tiere anzuheben, umfaßt.

3. Vorrichtung nach Anspruch 2, dadurch gekennzeichnet, daß es sich bei dem Glied (15) um einen Zylinder handelt, dessen eines Ende über ein Gelenk mit dem ersten Stützmittel (14) verbunden ist, während das freie Ende seiner Kolbenstange (16) über ein Gelenk mit dem ersten Teil (13) des Antriebsmittels (5) verbunden ist oder umgekehrt.

4. Vorrichtung nach einem der vorhergehenden Ansprüche, dadurch gekennzeichnet, daß es sich bei dem Antriebsmittel (5) um einen Zylinder (10) handelt, dessen Kolbenstange (26) den die Elektrode(n) (3) tragenden Träger (2) trägt.

5. Vorrichtung nach Anspruch 4, dadurch gekennzeichnet, daß eine Stütze (18) an der Kolbenstange (26) des als Antriebsmittel (5) wirkenden Zylinders (10) befestigt ist, wobei die Elektrode(n) (3) (jeweils) über ein Gelenk mittels eines Zylinders (21), zum Schwenken der Elektrode(n) bezüglich der Stütze (18) mit der Stütze (18) verbunden ist bzw, sind.

6. Vorrichtung nach Anspruch 1, dadurch gekennzeichnet, daß es sich bei dem Antriebsmittel (5) und dem Glied (15) um Zylinder handelt, deren Kolbenstangen (26, 27) mittels einer Stange (25) miteinander verbunden sind, deren eines Ende über ein Gelenk mit der Kolbenstange des Antriebsmittels (5) verbunden ist, während das andere Ende der Stange über ein Gelenk mit der Kolbenstange (26) des Glieds (15) verbunden ist.

7. Vorrichtung nach einem der vorhergehenden Ansprüche, dadurch gekennzeichnet, daß der Träger (2) zwei Elektroden (3) trägt, wobei die Elektroden (3) so zueinander angeordnet sind, daß eine erste Elektrode (3) während eines Betäubungsvorgangs den Kopf eines zu betäubenden Tieres in der Nähe eines seiner Augen kontaktiert, während die zweite Elektrode (3) den Kopf des Tieres in der Nähe eines seiner Ohren kontaktiert.

8. Vorrichtung nach einem der vorhergehenden Ansprüche, dadurch gekennzeichnet, daß die Elektrode(n) (3) über ein Mittel zum zumindest teilweisen Bewegen der Elektrode(n) (3) von dem Träger (2) weg während dessen Anhebens vor Ende eines Betäubungsvorgangs mit dem Träger (2) verbunden ist bzw. sind.

9. Vorrichtung nach Anspruch 8, dadurch gekennzeichnet, daß die Elektrode(n) (3) über ein Gelenk mit dem Träger (2) verbunden und mit einem oder mehreren Zylindern (21) verbunden ist bzw. sind, um ein Ende der Elektrode(n) (3) von dem Träger (2) weg zu schwenken, während dieser am Ende eines Betäubungsvorgangs angehoben wird.

10. Vorrichtung nach Anspruch 1, dadurch gekennzeichnet, daß das zweite Stützmittel (12), mit dem ein zweites Teil (11) des Antriebsmittels (5) über ein Gelenk verbunden ist, ein Element (27) zum Anheben oder Absenken des zweiten Teils (11) bezüglich der Endlosförderer (6, 7) zum Bewegen der Tiere umfaßt.

11. Vorrichtung nach Anspruch 10, dadurch gekennzeichnet, daß sie ein Mittel zum Erfassen der Höhe eines zu betäubenden Tieres und ein auf das Glied (15) und auf das Element (27) wirkendes Mittel umfaßt, um die Höhe des Trägers zu Beginn eines Betäubungsvorgangs bezüglich der erfaßten Höhe einzustellen.

12. Vorrichtung nach einem der vorhergehenden Ansprüche, dadurch gekennzeichnet, daß die Vorrichtung mit einem Mittel (44) zum Drücken eines zu betäubenden Tieres, bevor das Tier von dem Förderer (6, 7) zu der Elektrode bzw. den Elektrode(n) (3) bewegt wird, versehen ist.

13. Vorrichtung nach Anspruch 12, dadurch gekennzeichnet, daß das Drückmittel zwei Rollen (44) umfaßt, die einen polygonalen Querschnitt aufweisen und dazwischen einen Durchgang für das zu betäubende Tier aufweisen.

14. Verfahren zum elektrischen Betäuben von Schlachttieren durch Verwendung einer Vorrichtung nach Anspruch 8 oder 9, bei dem ein zu betäubendes Tier zu zwei Elektroden (3) hin bewegt wird, der Kopf des Tieres während des Bewegens mit den beiden Elektroden (3) kontaktiert wird, um es zu betäuben, und die Elektroden während des Bewegens des Tieres am Ende eines Betäubungsvorgangs allmählich vom Kopf des Tieres abgehoben werden, um den Kontakt zwischen dem Tier und den Elektroden allmählich zu vermindern.

15. Verfahren nach Anspruch 14, dadurch gekennzeichnet, das der die Elektroden tragende Träger am Ende des Betäubungsvorgangs bezüglich des Förderers des Tieres angehoben wird, während die Elektroden geschwenkt werden, um ein Ende der Elektroden von dem Träger weg zu schieben, wodurch der Kontakt zwischen dem Tier und den Elektroden allmählich vermindert wird.

16. Verfahren nach Anspruch 15, dadurch gekennzeichnet, daß die Elektroden am Ende des Betäubungsvorgangs aus einer im wesentlichen horizontalen Position in eine im wesentlichen vertikale Position geschwenkt werden.

17. Verfahren nach Anspruch 16, dadurch gekennzeichnet, daß die Elekroden (3), nachdem sie in eine im wesentlichen vertikale Position geschwenkt worden sind, um den Kontakt zwischen Tier und Elektroden zu vermindern, in eine im wesentlichen horizontale Position geschwenkt werden, um zu gewährleisten, daß während des Bewegens kein Kontakt mehr zwischen den Elektroden und dem betäubten Tier besteht.

18. Verfahren nach Anspruch 17, dadurch gekennzeichnet, daß das Schwenken der Elektroden (3) in eine geneigte oder im wesentlichen horizontale Position um einen Schaft in Vorwärtsrichtung des betäubten Tiers vollzogen wird.

## Revendications

1. Appareil pour étourdir électriquement des animaux à abattre, ledit appareil comprenant des transporteurs à courroie sans fin (6,7) pour déplacer des animaux à étourdir, un support (2) portant au moins une électrode (3), un moyen de commande (5) pour déplacer ledit support (2) pendant l'opération réelle d'étourdissement, et un moyen pour obtenir une montée de l'électrode ou des électrodes, à la fin de l'opération d'étourdissement, par rapport au parcours de l'électrode ou des électrodes lors de l'opération d'étourdissement, caractérisé en ce que ledit moyen pour obtenir une montée de l'électrode ou des électrodes comprend un organe (15) relié au moyen de commande, qui est relié à pivotement à un premier moyen de support (14), ledit organe (15) pivotant le moyen de commande (15) pour obtenir une montée du support (2), portant ladite ou plusieurs électrodes (3), à la fin de l'opération d'étourdissement, par rapport au parcours de l'électrode ou des électrodes lors de l'opération d'étourdissement.

2. Appareil suivant la revendication 1, caractérisé en ce que le moyen de commande (5) comprend, d'une part, une première partie (13) reliée au moyen de l'organe (15) au premier moyen de support (14), et, d'autre part, une deuxième partie (11) reliée à pivotement à un deuxième moyen de support (12), pour monter ou descendre ladite première partie (13) par rapport aux transporteurs à courroie sans fin (6,7) pour déplacer les animaux.

3. Appareil suivant la revendication 2, caractérisé en ce que l'organe (15) est un vérin, une extrémité duquel étant reliée à pivotement au premier moyen de support (14), tandis que l'extrémité libre de la tige (16) de son piston est reliée à pivotement à la première partie (13) du moyen de commande (5) ou inversément.

4. Appareil suivant l'une quelconque des revendications précédentes, caractérisé en ce que le moyen de commande (5) est un vérin (10), dont la tige (26) du piston porte le support (2) qui porte l'électrode ou les électrodes.

5. Appareil suivant la revendication 4, caractérisé en ce qu'un support (18) est monté sur la tige (26) du piston du vérin (10) agissant sur le moyen de commande (5), la ou les électrodes (3) étant (chacune) reliée(s) à pivotement audit support (18) au moyen d'un vérin (21) pour la ou les pivoter par rapport audit support (18).

6. Appareil suivant la revendication 1, caractérisé en ce que le moyen de commande (5) et l'organe (15) sont des vérins présentant des tiges (26,27) de piston reliées entre elles par une barre (25), une extrémité de laquelle étant articulée à la tige du piston du moyen de commande (5), tandis que l'autre extrémité de ladite barre est articulée à la tige (26) du piston de l'organe (15).

7. Appareil suivant l'une quelconque des revendications précédentes, caractérisé en ce que le support (2) porte deux électrodes (3), lesdites électrodes (3) étant agencées l'une par rapport à l'autre de sorte que pendant l'opération d'étourdissement, une première électrode (3) touche la tête d'un animal à étourdir au voisinage d'un de ses yeux, tandis que la deuxième électrode (3) touche la tête dudit animal au voisinage d'une de ses oreilles.

8. Appareil suivant l'une quelconque des revendications précédentes, caractérisé en ce que la ou les électrodes (3) est/sont reliée(s) au support (2) par un moyen pour éloigner au moins partiellement la ou les électrodes (3) par rapport au support (2) avant la fin d'une opération d'étourdissement pendant sa montée.

9. Appareil suivant la revendication 8, caractérisé en ce que la ou les électrodes (3) est/sont reliée(s) à pivotement au support (2) et est/sont reliée(s) à un ou plusieurs vérins (21) pour éloigner par pivotement une extrémité de l'électrode ou des électrodes (3) par rapport au support (2) pendant sa montée à la fin d'une opération d'étourdissement.

10. Appareil suivant la revendication 1, caractérisé en ce que le deuxième moyen de support (12) auquel une deuxième partie (11) du moyen de commande (5) est reliée à pivotement comprend un élément (27) pour monter ou abaisser ladite deuxième partie (11) par rapport aux transporteurs à courroie sans fin (6,7) pour déplacer les animaux.

11. Appareil suivant la revendication 10, caractérisé en ce qu'il comprend un moyen pour déterminer la hauteur d'un animal à étourdir, et un moyen agissant sur l'organe (15) et sur l'élément (27) pour adapter la hauteur du support au début d'une opération d'étourdissement en fonction de la hauteur détectée.

12. Appareil suivant l'une quelconque des revendications précédentes, caractérisé en ce que l'appareil est muni d'un moyen (44) pour presser un animal à étourdir avant que ledit animal soit déplacé par le transporteur à courroie (6,7) vers la ou les électrodes (3).

13. Appareil suivant la revendication 12, caractérisé en ce que le moyen de pression comprend deux rouleaux (44) ayant une section transversale polygonale et définissant entre eux un passage pour l'animal à étourdir.

14. Procédé pour étourdir électriquement des animaux à abattre au moyen d'un appareil suivant la revendication 8 ou 9, dans lequel un animal à étourdir est déplacé vers deux électrodes (3); pendant son mouvement, la tête dudit animal touche les deux électrodes (3) pour l'étourdir et pendant le mouvement de l'animal, lesdites électrodes sont progressivement éloignées de ladite tête à la fin d'une opération d'étourdissement, de manière à réduire progressivement le contact de l'animal contre les électrodes.

15. Procédé suivant la revendication 14, caractérisé en ce qu'à la fin d'une opération d'étourdissement, le support portant les électrodes est monté par rapport au transporteur de l'animal, alors que les électrodes sont pivotées pour éloigner une extrémité des électrodes par rapport au support, de sorte que le contact entre l'animal et les électrodes soit progressivement réduit.

16. Procédé suivant la revendication 15, caractérisé en ce que les électrodes sont pivotées à la fin d'une opération d'étourdissement d'une position sensiblement horizontale à une position sensiblement verticale.

17. Procédé suivant la revendication 16, caractérisé en ce que les électrodes (3), après avoir pivoté dans leur position sensiblement verticale pour réduire le contact animal-électrodes, sont pivotées dans une position sensiblement horizontale pour assurer aucun contact entre les électrodes et l'animal étourdi en mouvement.

18. Procédé suivant la revendication 17, caractérisé en ce que le pivotement des électrodes (3) dans une position inclinée ou sensiblement horizontale est effectué autour d'un arbre dans la direction d'avancement de l'animal étourdi.
